# FASCICULE DE BREVET EUROPEEN

(11) **EP 2 651 007 B1**
(45) Date de publication et mention de la délivrance du brevet: **17.06.2020**
(21) Numéro de dépôt: 13160440.7
(22) Date de dépôt: 21.03.2013
(51) Int. Cl.: H02J 7/14, B60R 16/03, B60W 10/26

(54) **Système d'alimentation électrique**
Stromversorgungssystem
Electrical power supply system

(30) Priorité: 11.04.2012 FR 1253307
(43) Date de publication de la demande: 16.10.2013
(73) Titulaire: PSA Automobiles SA, 78300 Poissy (FR)
(72) Inventeur: Comte, Raphaël, 77380 Combs la Ville (FR); Belkhiri, Abdeslam, 92110 Clichy (FR); Boucly, Bernard, 78150 Le Chesnay (FR)

(56) Documents cités:
- WO-A1-2011/046147
- FR-A1- 2 902 705
- FR-A1- 2 918 027
- FR-A1- 2 928 049
- FR-A1- 2 945 899
- FR-A1- 2 963 678

## Description

### DOMAINE TECHNIQUE

Un aspect de l'invention concerne un système d'alimentation électrique. Le système d'alimentation électrique peut effectuer, par exemple, une gestion d'énergie électrique dans un véhicule automobile. Un autre aspect de l'invention concerne un véhicule automobile comprenant un système d'alimentation électrique, un procédé pour contrôler un système d'alimentation électrique, et un programme pour un processeur.

### ETAT DE LA TECHNIQUE ANTERIEURE

Dans un véhicule automobile, un système d'alimentation électrique comprend un générateur d'énergie électrique qui est typiquement sous forme d'un alternateur prélevant un couple d'un moteur à combustion. Le système d'alimentation électrique comprend également un dispositif de stockage d'énergie électrique qui est généralement sous forme d'une batterie. Lorsque le moteur à combustion ne tourne pas, la batterie peut électriquement alimenter un ou plusieurs consommateurs d'énergie électrique qui font typiquement partie d'un réseau de bord.

La batterie peut être directement connectée à l'alternateur et aux consommateurs d'énergie électrique. Dans une telle configuration de connexion directe, il y a des transferts d'énergie électrique entre l'alternateur, les consommateurs d'énergie électrique et la batterie lorsque le moteur à combustion tourne. Dans un mode de transfert, l'alternateur recharge la batterie et fournit de l'énergie électrique aux consommateurs d'énergie électrique. Dans un autre mode de transfert, la batterie fournit au moins partiellement de l'énergie électrique aux consommateurs d'énergie électrique.

La configuration où la batterie est directement connectée présente des inconvénients. L'alternateur est typiquement amené à fournir une tension de sortie relativement élevée, par exemple 15 V, afin d'améliorer la recharge de la batterie.
Les consommateurs d'énergie électrique reçoivent également cette tension de sortie relativement élevée. De ce fait, il y a une surconsommation d'énergie électrique inutile. Cette surconsommation se traduit par une surconsommation en carburant, qui entraîne une augmentation du rejet de CO2.

Un autre inconvénient est lié aux aspects suivants. Un consommateur d'énergie électrique peut nécessiter une tension relativement élevée pour garantir un fonctionnement correct. Par exemple, un essuie vitre a besoin d'une tension de 14 V. L'alternateur peut donc être amené à fournir cette tension relativement élevée entraînant une recharge forcée de la batterie qui n'est pas forcément souhaitée.

La demande de brevet français non publiée dont le numéro de dépôt est FR 1150072 décrit un système d'alimentation électrique comprenant un régulateur d'alimentation électrique disposé entre le générateur d'énergie électrique et le dispositif de stockage d'énergie électrique. Ce régulateur d'alimentation électrique constitue une interface qui permet un découplage entre, d'une part, une tension fournie par le générateur d'énergie électrique et, d'autre part, une tension présente au dispositif de stockage d'énergie électrique. Ces tensions peuvent être différentes. Cela permet d'éviter une surconsommation d'énergie électrique telle que décrite dans ce qui précède.

Plus spécifiquement, le régulateur d'alimentation électrique peut fonctionner comme un convertisseur, couramment désigné convertisseur DC/DC. En modifiant les consignes de tension et de courant de régulation du convertisseur DC/DC celui-ci peut faire office de générateur de courant régulé en tension ou un générateur de courant. Ce fonctionnement permet un transfert d'énergie électrique du générateur d'énergie électrique vers le dispositif de stockage d'énergie électrique afin d'effectuer une recharge. Le fonctionnement permet également un transfert d'énergie électrique du dispositif de stockage d'énergie électrique vers les consommateurs d'énergie électrique, qui sont électriquement reliés au générateur d'énergie électrique.

Le document FR 2 902 705 A1 décrit un système micro-hybride pour véhicule comprenant une machine électrique tournante apte à être couplée mécaniquement à un moteur du véhicule, un convertisseur alternatif-continu, un convertisseur continu-continu, des premier et second réservoirs d'énergie électrique aptes à stocker une énergie électrique produite par la machine tournante et à restituer celle-ci pour des dispositifs consommateurs équipant le véhicule, et des moyens de commande pour commander le fonctionnement du système micro-hybride.

Le document WO 2011/046147 A1 décrit un système d'alimentation électrique comprenant un générateur d'énergie électrique apte à fournir une puissance électrique à un consommateur d'énergie électrique, un dispositif de stockage d'énergie électrique, et un régulateur d'alimentation électrique disposé entre le générateur d'énergie électrique et le dispositif de stockage d'énergie électrique. Ce système correspond au préambule de la présente revendication 1.

### EXPOSE DE L'INVENTION

Il existe un besoin pour une solution permettant un meilleur fonctionnement d'un générateur d'énergie électrique dans un système d'alimentation électrique, notamment en termes d'efficacité, de longévité, ou même d'écologie.

Selon un aspect de l'invention, un système d'alimentation électrique comprend :
- un générateur d'énergie électrique apte à fournir une puissance électrique à un consommateur d'énergie électrique,
- un dispositif de stockage d'énergie électrique, et
- un régulateur d'alimentation électrique disposé entre le générateur d'énergie électrique et le dispositif de stockage d'énergie électrique,
le système d'alimentation électrique comprenant un contrôleur apte à commander le régulateur d'alimentation électrique de fonctionner dans au moins un des deux modes suivants :
a) un mode de délestage lorsqu'une indication de la puissance électrique fournie par le générateur d'énergie électrique est au-dessus d'un seuil de délestage, dans lequel mode le régulateur d'alimentation électrique tire une puissance électrique du dispositif de stockage pour fournir au moins une partie de cette puissance électrique au consommateur d'énergie électrique, le régulateur d'alimentation électrique fonctionnant en générateur de courant pur et,
b) un mode de lestage lorsqu'une indication de la puissance électrique fournie par le générateur d'énergie électrique est en dessous d'un seuil de lestage, dans lequel mode le régulateur d'alimentation électrique tire une puissance électrique du générateur d'énergie électrique pour fournir au moins une partie de cette puissance électrique au dispositif de stockage d'énergie électrique.
caractérisé en ce que le contrôleur est apte à contrôler le régulateur d'alimentation électrique pour qu'en au moins un des deux modes, le mode de délestage et le mode de lestage, la puissance électrique tirée du dispositif de stockage d'énergie électrique dans le cas du mode de lestage ou la puissance électrique du dispositif de stockage d'énergie électrique fournie au consommateur électrique dans le cas du mode de délestage, varie en fonction d'un écart entre, d'une part, l'indication de la puissance électrique fournie par le générateur d'énergie électrique et, d'autre part, le seuil de délestage en mode de délestage, et le seuil de lestage en mode de lestage.

Ainsi, l'invention permet de temporairement réduire la puissance électrique que le générateur d'énergie électrique doit fournir pour faire fonctionner correctement les consommateurs d'énergie électrique. Cela constitue un délestage du générateur d'énergie électrique qui peut contribuer à un fonctionnement efficace du générateur d'énergie électrique et qui contribue généralement à une meilleure longévité. Par exemple, dans le cas où le générateur d'énergie électrique est sous forme d'un alternateur prélevant un couple d'un moteur à combustion, le délestage se traduit en une réduction de consommation de carburant et, par conséquent, une réduction du rejet de CO2. En outre, le délestage contribue généralement à la durabilité d'une ou plusieurs pièces mécaniques du générateur d'énergie électrique telle que, par exemple, une courroie accessoire, par réduction du couple subit par cette courroie.

L'invention permet également d'augmenter la puissance électrique demandée au générateur d'énergie électrique. Cela constitue un lestage du générateur d'énergie électrique qui peut également contribuer à un meilleur fonctionnement du générateur d'énergie électrique, et même d'autres entités associées au générateur d'énergie électrique. Par exemple, dans le cas où le générateur d'énergie électrique est sous forme d'un alternateur prélevant un couple d'un moteur à combustion, le lestage peut permettre au moteur à combustion de constituer une réserve de couple. Cette réserve de couple peut servir à une fonction mécanique telle que, par exemple, une fonction d'entraînement de roue. Le lestage peut également accélérer un processus de chauffage du moteur à combustion afin que le moteur à combustion atteigne plus rapidement un état thermique souhaité. Le lestage peut également contribuer à une régénération d'un filtre à particules prévu pour dépolluer des gaz d'échappement provenant du moteur à combustion.

Un autre aspect de l'invention concerne un véhicule automobile comprenant un système d'alimentation électrique tel que défini dans ce qui précède.

Encore un autre aspect de l'invention concerne un procédé pour contrôler un système d'alimentation tel que défini dans ce qui précède, dans lequel procédé le contrôleur commande le régulateur d'alimentation électrique de fonctionner dans au moins un des deux modes : le mode de délestage et le mode de lestage

Encore un autre aspect de l'invention concerne un programme pour un processeur, le programme comprenant des données exécutables par le processeur pour l'exécution des étapes du procédé tel que défini dans ce qui précède.

Un mode de réalisation de l'invention comprend avantageusement une ou plusieurs des caractéristiques supplémentaires suivantes, lesquelles sont décrites dans les paragraphes suivants.

Le contrôleur détermine avantageusement une limite pour la puissance électrique tirée du dispositif de stockage d'énergie électrique et contrôle le régulateur d'alimentation électrique pour que la puissance électrique tirée du dispositif de stockage ne dépasse pas cette limite.

Le contrôleur détermine avantageusement la limite pour la puissance électrique tirée du dispositif de stockage en tant que pourcentage de la puissance électrique fournie par le générateur d'énergie électrique au consommateur d'énergie électrique.

Le contrôleur adapte avantageusement la limite pour la puissance électrique tirée du dispositif de stockage en fonction d'au moins un des paramètres suivants : (i) un niveau de charge du dispositif de stockage, (ii) une température relative au dispositif de stockage, (iii) une indication d'un état de vieillissement du dispositif de stockage.

Le contrôleur commande avantageusement le régulateur d'alimentation électrique de fonctionner dans le mode de délestage que lorsque le dispositif de stockage d'énergie électrique a un niveau de charge supérieure à un seuil de charge minimale.

Le contrôleur applique avantageusement un ensemble de consignes au régulateur d'alimentation électrique en mode de délestage, l'ensemble de consignes comprenant : (i) une consigne de tension de sortie qui est supérieure à une tension de sortie fournie par le générateur d'énergie électrique, et (ii) une consigne de courant de sortie déterminée en fonction d'une valeur cible pour la puissance électrique fournie par le régulateur d'alimentation électrique au consommateur d'énergie électrique de sorte à obtenir un fonctionnement en générateur de courant pur.

Le générateur d'énergie électrique peut comprendre un moteur et un alternateur apte à prélever un couple du moteur. Dans ce cas, l'indication de la puissance fournie par le générateur d'énergie électrique est avantageusement une indication du couple prélevé du moteur.

Une description détaillée en référence à des dessins illustre l'invention brièvement exposée précédemment, ainsi que les caractéristiques supplémentaires identifiées précédemment.

### DESCRIPTION SOMMAIRE DES DESSINS

- La figure 1 est un diagramme de blocs illustrant un système d'alimentation électrique.
- La figure 2 est un organigramme illustrant un procédé pour contrôler le système d'alimentation électrique illustré à la figure 1.
- La figure 3 est un diagramme graphique illustrant un seuil de délestage et un seuil de lestage qui varient dans le temps.
- La figure 4 est un organigramme illustrant un procédé pour déterminer des consignes pour un régulateur d'alimentation électrique qui fait partie du système d'alimentation électrique illustré à la figure 1.
- La figure 5 est un diagramme graphique illustrant une limite supérieure pour un courant fourni par le régulateur d'alimentation électrique, la limite supérieure variant en fonction d'une température relative au dispositif de stockage et d'un niveau de charge du dispositif de stockage.

### DESCRIPTION DETAILLEE

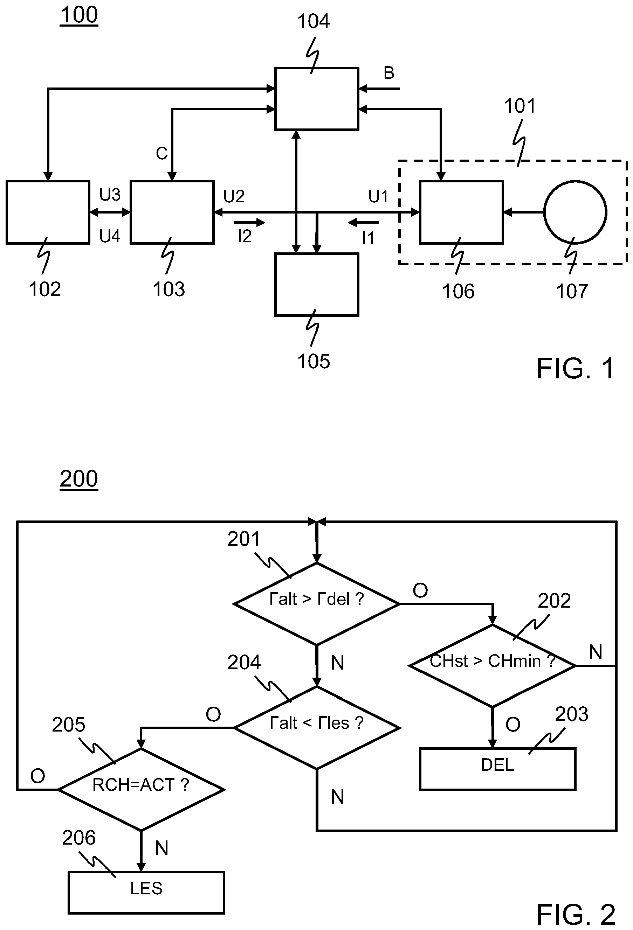

La figure 1 illustre schématiquement un système d'alimentation électrique 100 qui peut faire partie, par exemple, d'un véhicule automobile. Le système d'alimentation électrique 100 comprend un générateur d'énergie électrique 101, un dispositif de stockage d'énergie électrique 102, un régulateur d'alimentation électrique 103, et un contrôleur 104. Le système d'alimentation électrique 100 est relié à des consommateurs d'énergie électrique 105.

Le contrôleur 104 peut être réalisé, par exemple, au moyen d'un processeur convenablement programmé, ou d'un ensemble de tels processeurs. Le contrôleur 104 est avantageusement relié à un bus de communication B, par exemple, de type CAN, CAN étant un acronyme pour l'expression anglaise « Controller Area Network ». D'autres dispositifs aptes à communiquer des données peuvent être reliés à ce bus de communication B, comme, par exemple, un autre contrôleur dédié au moteur à combustion, et un ou plusieurs capteurs. Certaines informations aussi peuvent être analogiques comme par exemple une mesure de tension.

La figure 1 illustre un exemple dans lequel le générateur d'énergie électrique 101 comprend un alternateur 106 couplé à un moteur à combustion 107. Le dispositif de stockage d'énergie électrique 102 peut être sous forme, par exemple, d'une batterie, par exemple une batterie traditionnelle au plomb 12V pour automobile. Dans ce qui suit, le dispositif de stockage d'énergie électrique sera désigné « batterie 102 » pour des raisons de convenance. Au moins une partie des consommateurs d'énergie électrique 105 peuvent faire partie d'un réseau de bord. Dans ce qui suit, les consommateurs d'énergie électrique seront collectivement désignés « réseau de bord 105 » pour des raisons de convenance.

Le système d'alimentation électrique 100 fonctionne globalement comme suit. Lorsque le moteur à combustion 107 tourne, l'alternateur 106 prélève un couple du moteur à combustion 107. En fait, l'alternateur 106 transforme ce couple prélevé en une puissance électrique. L'alternateur 106 fournit une tension de sortie U1 et un courant de sortie 11. Le produit de la tension de sortie U1 et du courant de sortie 11 correspond à une puissance électrique générée à partir du couple prélevé. De préférence, le contrôleur 104 contrôle la tension de sortie U1 de l'alternateur 106 en appliquant une consigne à l'alternateur 106.

Le régulateur d'alimentation électrique 103 peut fonctionner en différents modes. Dans un premier mode de fonctionnement, le régulateur d'alimentation électrique 103 se comporte comme un interrupteur fermé. Dans ce mode, le régulateur d'alimentation électrique 103 constitue une connexion électrique directe entre, d'une part, la batterie 102 et, d'autre part, l'alternateur 106 et le réseau de bord 105. Ce mode de fonctionnement sera désigné « mode de connexion directe » dans ce qui suit. Dans un second mode de fonctionnement, le régulateur d'alimentation électrique 103 se comporte comme un interrupteur ouvert. Dans ce mode, la batterie 102 est déconnectée de l'alternateur 106 et du réseau de bord 105. Ce mode de fonctionnement sera désigné « mode de batterie isolée » dans ce qui suit.

Dans un troisième mode de fonctionnement, le régulateur d'alimentation électrique 103 se comporte comme un convertisseur DC/DC, c'est-à-dire un convertisseur de tension, dans le sens de l'alternateur 106 vers la batterie 102. Dans ce mode, le régulateur d'alimentation électrique 103 transfère de l'énergie électrique de l'alternateur 106 vers la batterie 102. C'est-à-dire, le régulateur d'alimentation électrique 103 tire une puissance électrique de l'alternateur 106 pour fournir au moins une partie de cette puissance électrique à la batterie 102 pour la recharger. Le régulateur d'alimentation électrique 103 applique à la batterie 102 une consigne de tension de sortie U3 permettant la recharge de la batterie 102. Ce troisième mode de fonctionnement sera désigné « mode de lestage » dans ce qui suit.

Dans un quatrième mode de fonctionnement, le régulateur d'alimentation électrique 103 se comporte également comme un convertisseur DC/DC, mais dans le sens de la batterie 102 vers le réseau de bord 105. Dans ce mode, le régulateur d'alimentation électrique 103 transfère de l'énergie électrique de la batterie 102 vers le réseau de bord 105. C'est-à-dire, le régulateur d'alimentation électrique 103 tire une puissance électrique de la batterie 102 pour fournir au moins une partie de cette puissance électrique au réseau de bord 105. Le régulateur d'alimentation électrique 103 applique au réseau de bord 105 une consigne de tension de sortie U2 et une consigne de courant de sortie 12. La consigne de courant de sortie 12 correspond à une fraction du courant consommé par le réseau de bord. La consigne de tension de sortie U2 est sensiblement égale à la tension de sortie U1 de l'alternateur 106. Ce quatrième mode de fonctionnement sera désigné « mode de délestage » dans ce qui suit.

De préférence, le régulateur d'alimentation électrique 103 est un convertisseur de puissance du type convertisseur continu/continu ou DC/DC.

Le contrôleur 104 applique un ensemble de consignes C au régulateur d'alimentation électrique 103. Cet ensemble de consignes C peut comprendre une consigne relative au mode de fonctionnement : mode de connexion directe, mode de batterie isolée, mode de lestage, ou mode de délestage. Dans le cas où le mode de délestage s'applique, l'ensemble de consignes C peut également comprendre une consigne de tension de sortie et une consigne de courant de sortie. Il en va de même dans le cas où le mode de lestage s'applique.

Le contrôleur 104 contrôle le régulateur d'alimentation électrique 103, ainsi que d'autres éléments du système d'alimentation électrique 100, en fonction de divers paramètres de gestion. Une indication du couple que l'alternateur 106 prélève du moteur à combustion 107 constitue un paramètre de gestion. Cette indication sera désignée « indication du couple prélevé » dans ce qui suit. Un seuil de lestage et un seuil de délestage, qui sont relatifs à l'indication du couple prélevé, constituent d'autres paramètres de gestion. Le seuil de délestage constitue une limite supérieure pour le couple prélevé du moteur à combustion. Le seuil de lestage constitue une limite inférieure pour ce couple.

De façon générale, des paramètres relatifs à l'alternateur 106 peuvent constituer des paramètres de gestion. Il en va de même pour des paramètres relatifs à la batterie 102, des paramètres relatifs au moteur à combustion 107, et des paramètres relatifs au réseau de bord 105. Par exemple, les paramètres suivants relatifs à l'alternateur 106 peuvent constituer des paramètres de gestion : la tension de sortie U1 fournie par l'alternateur 106, le courant de sortie l1 fourni par l'alternateur 106, un régime de l'alternateur 106, une température relative à l'alternateur 106, un niveau de charge de l'alternateur 106. Les paramètres suivants relatifs à la batterie 102, peuvent constituer des paramètres de gestion : un niveau de charge de la batterie 102, une température relative à la batterie 102, et un état de vieillissement de la batterie 102.

Le contrôleur 104 reçoit diverses informations qui peuvent inclure un ou plusieurs paramètres de gestion, ou à la base desquelles les paramètres de gestion peuvent être déterminés. Par exemple, le contrôleur 104 peut recevoir l'indication du couple prélevé d'un module de mesure associé à l'alternateur 106. De façon alternative, le contrôleur 104 peut recevoir des informations à partir desquelles il est possible d'estimer le couple que l'alternateur 106 prélève du moteur à combustion 107. Ces informations peuvent être relatives au fonctionnement de l'alternateur 106 : le régime de l'alternateur 106, la température relative à l'alternateur 106, la tension de sortie U1 fournie par l'alternateur 106, le courant de sortie l1 fourni par l'alternateur 106, et une définition de rendement relative à l'alternateur 106.

Le contrôleur 104 peut recevoir une information définissant le seuil de délestage d'un autre contrôleur dédié au moteur à combustion. Il en va de même pour le seuil de lestage. Le seuil de délestage peut être variable dans le temps en fonction d'un ou plusieurs paramètres de fonctionnement du moteur thermique, tel que, par exemple, une température relative à un fluide de refroidissement. Le contrôleur 104 peut recevoir des informations provenant de divers capteurs indiquant, par exemple, le niveau de charge de la batterie 102 et la température relative à la batterie 102. En général, le contrôleur 104 peut recevoir des informations par l'intermédiaire du bus de communication B mentionnée dans ce qui précède, ou par d'autres voies de communication.

La figure 2 illustre un procédé 200 pour contrôler le système d'alimentation électrique 100 illustré à la figure. Le procédé 200 comprend une série d'étapes 201-206 effectuée par le contrôleur 104. Il a été mentionné que le contrôleur 104 peut être implémenté au moyen d'un processeur convenablement programmé, ou d'un ensemble de tels processeurs. La figure 2 peut donc être considérée comme étant une représentation, sous forme d'un organigramme, d'un ensemble d'instructions permettant à un processeur, ou à un ensemble de processeurs, d'effectuer différentes opérations décrites dans ce qui suit en référence à la figure 2.

Dans une étape de vérification de couple prélevé maximum 201, le contrôleur 104 vérifie si la condition suivante est vraie ou fausse : l'indication du couple prélevé est supérieure au seuil de délestage (┌alt > ┌del ?). Dans le cas où cette condition est vraie, le contrôleur 104 effectue une étape de vérification de charge 202. Dans cette étape 202, le contrôleur 104 vérifie si la condition suivante est vraie ou fausse : le niveau de charge de la batterie 102 est supérieur à un niveau de charge minimum pour délestage (CHst > CHmin ?). Dans le cas où cette condition est vraie, le contrôleur 104 effectue une étape de commande de mise en mode de délestage 203. Dans cette étape 203, le contrôleur 104 commande le régulateur d'alimentation électrique 103 de fonctionner dans le mode de délestage (DEL) décrit dans ce qui précède. Pour ce faire, le contrôleur 104 applique une consigne relative à ce mode de fonctionnement au régulateur d'alimentation électrique 103. Dans le cas où la condition vérifiée à l'étape de vérification de charge 202 est fausse, le contrôleur 104 n'autorise pas le régulateur d'alimentation électrique 103 à fonctionner dans le mode de délestage. Dans ce cas, le contrôleur 104 peut, par exemple, retourner à l'étape de vérification de couple prélevé maximum 201. Dans le respect des contraintes du réseau de bord 105, le contrôleur 104 peut aussi réduire la tension de consigne de régulation de l'alternateur 106 et / ou arrêter temporairement et de manière choisie l'activation de consommateurs électriques du réseau de bord 105 pour réduire le couple prélevé au moteur 107.

En fait, le contrôleur 104 amène le régulateur d'alimentation électrique 103 à fonctionner dans le mode de délestage lorsqu'une condition principale et une condition subsidiaire sont réunies. La condition principale consiste en ce que le couple prélevé par l'alternateur 106 dépasse la limite supérieure qui a été définie pour ce couple, cette définition pouvant être dynamique, en fonction des conditions de fonctionnement ou statique (seuil forfaitaire). La condition subsidiaire consiste en ce que la batterie 102 soit suffisamment chargée, pour qu'elle puisse fournir de l'énergie électrique au réseau de bord 105, sans risque majeur d'un défaut de charge.

Le contrôleur 104 effectue une étape de vérification de couple prélevé minimum 204 lorsque la condition vérifiée dans l'étape de vérification de couple prélevé maximum 201 est fausse. Dans l'étape de vérification de couple prélevé minimum 204, le contrôleur 104 vérifie si la condition suivante est vraie ou fausse : l'indication du couple prélevé est inférieure au seuil de lestage (fait < ries ?). Dans le cas où cette condition est vraie, le contrôleur 104 effectue une étape de vérification de recharge en cours 205. Dans cette étape 205, le contrôleur 104 vérifie si la condition suivante est vraie ou fausse : le régulateur d'alimentation électrique 103 est en cours de recharger la batterie 102 (RCH=ACT ?). Dans le cas où cette condition est fausse, le contrôleur 104 effectue une étape de commande de mise en mode de lestage 206. Dans cette étape 206, le contrôleur 104 commande le régulateur d'alimentation électrique 103 fonctionne dans le mode de lestage (LES) décrit dans ce qui précède. Pour ce faire, le contrôleur 104 applique une consigne relative à ce mode de fonctionnement au régulateur d'alimentation électrique 103.

Il convient de noter que lorsque le régulateur d'alimentation électrique 103 est en cours de recharger la batterie 102, ce fonctionnement s'apparente au mode de lestage. Toutefois, une recharge de la batterie 102 constitue un mode de fonctionnement spécifique qui intervient dans certaines conditions. Par exemple, une recharge de la batterie 102 peut avantageusement avoir lieu lors d'une phase de décélération avec coupure de l'injection carburant.

Dans le cas où la condition vérifiée à l'étape de vérification de charge 205 est vraie, c'est-à-dire, une recharge de la batterie 102 est déjà en cours, le contrôleur 104 n'autorise pas le régulateur d'alimentation électrique 103 à fonctionner dans le mode de lestage. En effet, une recharge est bien apparentée à du lestage, on ne change pas de mode de fonctionnement. Dans ce cas, le contrôleur 104 peut, par exemple, retourner à l'étape de vérification de couple prélevé maximum 201. Il en va de même pour le cas où la condition vérifiée à l'étape de vérification de couple prélevé minimum 204 est fausse. Dans ce cas, l'indication du couple prélevé se situe entre le seuil de lestage et le seuil de délestage.

En fait, le contrôleur 104 amène le régulateur d'alimentation électrique 103 à fonctionner dans le mode de lestage lorsqu'une condition principale et une condition subsidiaire sont réunies. La condition principale consiste en ce que le couple prélevé par l'alternateur 106 est en dessous de la limite inférieure qui a été définie pour ce couple, cette définition pouvant être dynamique, en fonction des conditions de fonctionnement ou statique (seuil forfaitaire). La condition subsidiaire consiste en ce que la batterie 102 ne soit pas en cours de recharge.

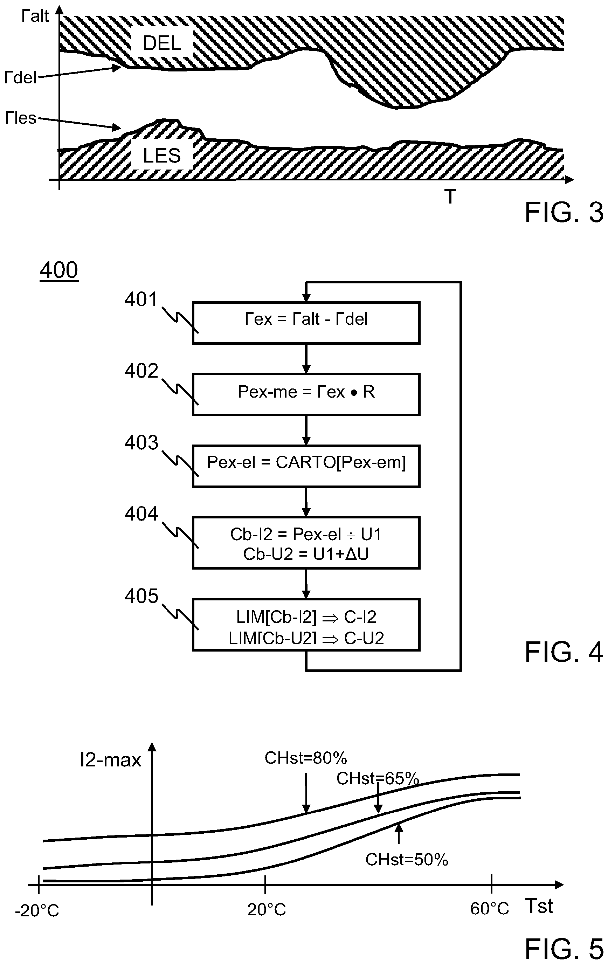

La figure 3 illustre le seuil de délestage et le seuil de lestage qui varient dans le temps. La figure est un diagramme comprenant un axe horizontal représentant le temps T est un axe vertical représentant l'indication du couple prélevé fait. Ce diagramme comprend une ligne irrégulière désignée ┌del qui représente le seuil de délestage, et une autre ligne irrégulière désignée ries qui représente le seuil de lestage. La ligne irrégulière désignée ┌del constitue une limite inférieure d'une zone désignée DEL qui représente le mode de délestage. La ligne irrégulière désignée ries constitue une limite supérieure d'une zone désignée LES qui représente le mode de lestage. Le seuil de délestage ┌del peut varier en fonction, par exemple, d'un ou plusieurs paramètres de fonctionnement du moteur thermique, tel que, par exemple, une température relative à un fluide de refroidissement. Le seuil de délestage ┌del peut en outre varier en fonction d'un ou plusieurs paramètres de fonctionnement d'autres entités, telles que, par exemple, l'alternateur 106 et le régulateur d'alimentation électrique 103.

La figure 4 illustre un procédé 400 pour déterminer des consignes pour le régulateur d'alimentation électrique 103. Le procédé 400 s'applique lorsque le régulateur d'alimentation électrique 103 fonctionne dans le mode de délestage. Le procédé comprend une série d'étapes 401-405 effectuée par le contrôleur 104. Il a été mentionné que le contrôleur 104 peut être implémenté au moyen d'un processeur convenablement programmé, ou d'un ensemble de tels processeurs. La figure 4 peut donc être considérée comme étant une représentation, sous forme d'un organigramme, d'un ensemble de d'instructions permettant à un processeur, ou à un ensemble de processeurs, d'effectuer différentes opérations décrites dans ce qui suit en référence à la figure 4.

Dans une étape de calcul d'écart 401, le contrôleur 104 calcule un écart entre l'indication du couple prélevé et le seuil de délestage (┌ex = ┌alt - ┌del). Ce calcul peut être sous forme d'une simple soustraction. Le calcul produit un écart de couple qui, en fait, représente une part du couple que l'alternateur 106 prélève en excès du moteur à combustion 107.

Dans une étape de calcul de puissance mécanique 402, le contrôleur 104 multiplie l'écart de couple par le régime de l'alternateur 106 (Pex-me = ┌ex • R). Cette multiplication produit une puissance mécanique prélevée en excès du moteur à combustion 107.

Dans une étape de calcul de puissance électrique 403, le contrôleur 104 convertit la puissance mécanique prélevée en excès en une puissance électrique prélevée en excès (Pex-el = CARTO[Pex-em]). Pour ce faire, le contrôleur 104 peut appliquer une cartographie relative à un rendement de l'alternateur 106. Cette cartographie peut être stockée dans une mémoire que le contrôleur 104 peut accéder en lecture. Une conversion de puissance mécanique en puissance électrique au moyen de la cartographie peut comprendre une ou plusieurs variables relatives à un fonctionnement actuel de l'alternateur 106. Par exemple, ces variables peuvent comprendre : une température relative à l'alternateur 106, la tension de sortie U1 fournie par l'alternateur 106, le régime de l'alternateur 106, ou un état de charge de l'alternateur 106.

Dans une étape d'établissement de consignes brutes 404, le contrôleur 104 établit une consigne brute pour le courant de sortie I2 du régulateur d'alimentation électrique 103 et une consigne brute pour la tension de sortie U2 (Cb-I2 = Pex-el ÷ U1 ; Cb-U2 = U1+ΔU). Le contrôleur 104 établit la consigne brute pour le courant de sortie I2 en divisant la puissance électrique prélevée en excès par la tension de sortie I1 de l'alternateur 106 (Cb-I2 = Pex-el ÷ U1). Le contrôleur 104 établit la consigne brute pour la tension de sortie U2 en ajoutant un surplus de tension à la tension de sortie U1 de l'alternateur 106 (Cb-U2 = U1+ΔU). Le surplus de tension peut-être, par exemple, 2 V lorsque la tension de sortie de l'alternateur 106 est dans une plage comprise entre, par exemple, 12 V et 16V.

La consigne brute pour la tension de sortie U2, qui est légèrement supérieure à la tension de sortie U1 de l'alternateur 106, sert à faire fonctionner le régulateur d'alimentation électrique 103 en tant que source de courant pour le réseau de bord 105. En fait, la consigne amène le régulateur d'alimentation électrique 103 à vouloir augmenter sa tension de sortie U2 jusqu'à ce que la consigne soit atteinte. Pour ce faire, le régulateur d'alimentation électrique 103 cherche à produire le plus de courant de sortie possible et se heurte, en quelque sorte, à la consigne pour le courant de sortie I2. Le courant de sortie I2 serait ainsi conforme à la consigne, tandis que la tension de sortie U2 sera équivalente à la tension de sortie U1 de l'alternateur 106. Cela est dû au fait que le régulateur d'alimentation électrique 103 est relié à l'alternateur 106 : le réseau de bord 105 reçoit une tension d'alimentation correspondant à la tension de sortie U1 de l'alternateur 106. Dans ce mode de fonctionnement, l'alternateur 106 impose sa tension sur le réseau de bord, on dit qu'il est générateur de courant régulé en tension tandis que le régulateur d'alimentation électrique 103 fournit du courant sans imposer sa tension, on dit qu'il est générateur de courant pur.

Dans une étape d'établissement de consignes effectives 405, le contrôleur 104 établit une consigne effective pour le courant de sortie I2 du régulateur d'alimentation électrique 103 (LIM[Cb-I2] => C-I2). Plus en détail, le contrôleur 104 effectue une première vérification dans laquelle le contrôleur 104 compare la consigne brute pour le courant de sortie I2 à une limite supérieure pour le courant de sortie. Dans le cas où la consigne brute ne dépasse pas la limite supérieure, la consigne brute devient une consigne autorisée pour le courant de sortie I2. En revanche, dans le cas où la consigne brute dépasse la limite supérieure, la consigne autorisée est égale à la limite supérieure pour le courant de sortie I2. Cela constitue un bridage du courant de sortie I2 du régulateur d'alimentation électrique 103.

La limite supérieure pour le courant de sortie I2 peut être définie de différentes façons. Par exemple, la limite supérieure peut être définie en tant que pourcentage du courant de sortie I1 fournie par l'alternateur 106 au réseau de bord 105. Ainsi, il est assuré que l'alternateur 106 impose sa tension sur le réseau de bord et que le régulateur d'alimentation électrique 103 est générateur de courant pur, tel que mentionné dans ce qui précède. La limite supérieure pour le courant de sortie I2 peut également être définie en fonction d'au moins un des paramètres suivants : (i) le niveau de charge de la batterie 102, (ii) une température relative à la batterie 102, (iii) une indication d'un état de vieillissement de la batterie 102. Cela évite que la batterie 102 soit trop sollicitée, ce qui pourrait nuire au bon fonctionnement du système d'alimentation électrique 100.

La figure 5 illustre, à titre d'exemple, la limite supérieure pour le courant de sortie I2 du régulateur d'alimentation électrique 103 qui varie en fonction de la température relative à la batterie 102 et du niveau de charge de la batterie 102. La figure 5 est un diagramme comprenant un axe horizontal représentant la température Tst relative à la batterie 102 et un axe vertical 12-max représentant la limite supérieure pour le courant de sortie I2. Ce diagramme comprend trois courbes : une première courbe désignée CHst=80% qui représente la limite supérieure lorsque le niveau de charge est égal à 80%, une seconde courbe désignée CHst=65% qui représente la limite supérieure lorsque le niveau de charge est égal à 65%, et une troisième courbe CHst=50% qui représente la limite supérieure lorsque le niveau de charge est égal à 50%. La limite supérieure 12-max de courant de sortie I2 du régulateur d'alimentation électrique 103 associée à la consigne de tension de sortie U2 déterminent une limite de puissance électrique tirée de la batterie 102.

Se référant de nouveau à la figure 4, dans l'étape d'établissement de consignes effectives 405, le contrôleur 104 effectue une seconde vérification suite à la première vérification. Dans la seconde vérification, le contrôleur 104 compare la consigne autorisée pour le courant de sortie I2 avec une consigne effective établie précédemment pour le courant de sortie I2. La consigne autorisée doit se trouver dans une plage de valeurs ayant une limite supérieure et une limite intérieure. La limite supérieure correspond à la consigne effective établie précédemment majorée d'un écart positif autorisé. La limite inférieure correspond à la consigne effective établie précédemment minorée d'un écart négatif autorisé. Dans le cas où la consigne autorisée se trouve dans cette plage, la consigne effective pour le courant de sortie I2 est égale à la consigne autorisée. Dans le cas où la consigne autorisée est au-dessus de la limite supérieure, la consigne effective est égale à cette limite, qui correspond à la consigne effective établie précédemment majorée d'un écart positif autorisé. Dans le cas où la consigne autorisée est en dessous de la limite inférieure, la consigne effective est égale à cette limite, qui correspond à la consigne effective établie précédemment minorée d'un écart négatif autorisé.

La seconde vérification décrite dans ce qui précède évite un changement relativement brusque de la consigne effective pour le courant de sortie I2 qui pourrait nuire à un bon fonctionnement. En fait, la seconde vérification permet de respecter des pentes autorisées pour une variation du courant de sortie I2 du régulateur d'alimentation électrique 103.

Dans l'étape d'établissement de consignes effectives 405, le contrôleur 104 établit également une consigne effective pour la tension de sortie U2 du régulateur d'alimentation électrique 103 (LIM[Cb-U2] => C-U2). Pour ce faire, le contrôleur 104 peut effectuer une vérification similaire à la seconde vérification pour la consigne effective pour le courant de sortie I2. C'est-à-dire, le contrôleur 104 vérifie que la consigne brute pour la tension de sortie U2 n'introduit pas de changement trop brusque. Dans le cas où cette vérification est positive, la consigne effective pour la tension de sortie U2 est égale à la consigne brute. Dans le cas où cette vérification est négative, la consigne effective pour la tension de sortie U2 correspond à la consigne effective établie précédemment majorée d'un écart positif autorisé, ou minorée d'un écart négatif autorisé, selon le cas applicable.

Le contrôleur 104 peut cycliquement effectuer la série d'étapes illustrées à la figure 4 avec une certaine périodicité. A chaque cycle, le contrôleur 104 établit des nouvelles consignes pour le régulateur d'alimentation électrique 103 fonctionnant dans le mode de délestage. Ainsi, le régulateur d'alimentation électrique 103 tire une puissance électrique de la batterie 102 qui varie en fonction d'un écart entre l'indication du couple prélevé et le seuil de délestage. A cet égard il convient de noter que l'indication du couple prélevé constitue, en effet, une indication d'une puissance électrique fournie par l'alternateur 106. Le bridage du courant de sortie du régulateur d'alimentation électrique 103 constitue, en effet, un bridage de la puissance électrique tirée de la batterie 102 en mode de délestage.

Le contrôleur 104 peut effectuer un procédé similaire au procédé illustré à la figure 4, et décrit dans ce qui précède, pour déterminer des consignes pour le régulateur d'alimentation électrique 103 lorsque le régulateur d'alimentation électrique 103 fonctionne dans le mode de lestage. Plus précisément, dans une étape similaire à l'étape de calcul d'écart 401 illustré à la figure 4, le contrôleur 104 calcule un écart entre l'indication du couple prélevé et le seuil de lestage. Le calcul produit un écart de couple qui, en fait, représente un déficit de couple prélevé du moteur à combustion 107. Le contrôleur 104 détermine un déficit de puissance mécanique prélevée à partir de l'écart de couple, d'une façon similaire à celle dans l'étape de calcul de puissance mécanique 402 décrite dans ce qui précède. Le contrôleur 104 convertit ce déficit de puissance mécanique prélevée en un déficit de puissance électrique prélevée, d'une façon similaire à celle dans l'étape de calcul de puissance électrique 403 décrite dans ce qui précède. Le contrôleur 104 établit des consignes brutes pour le régulateur d'alimentation électrique 103 à partir du déficit de puissance électrique prélevée. Par exemple, le contrôleur 104 établit une consigne brute pour un courant de sortie en divisant le déficit de puissance électrique prélevée par la tension de sortie U1 de l'alternateur 106, qui correspond à une tension d'alimentation du réseau de bord 105. Le contrôleur 104 peut ensuite effectuer une vérification similaire à la seconde vérification dans l'étape d'établissement de consignes effectives 405 décrite dans ce qui précède. Au besoin, dans le respect des contraintes du réseau de bord 105, le contrôleur 104 peut aussi augmenter la consigne de tension de l'alternateur et/ou activer temporairement et de manière choisie des consommateurs électriques du réseau de bord 105 pour accroître le couple prélevé au moteur 107.

### REMARQUES FINALES

La description détaillée en référence aux figures est simplement une illustration de l'invention. L'invention peut être réalisée de nombreuses façons différentes. Afin d'illustrer ceci, quelques alternatives sont indiquées sommairement.

L'invention peut être appliquée avantageusement dans de nombreux types de produits et procédés impliquant un système d'alimentation électrique comprenant un générateur d'énergie électrique et un dispositif de stockage d'énergie électrique. Un véhicule automobile n'est qu'un exemple d'un tel produit. L'invention peut également être appliquée, par exemple, dans un engin fixe tel qu'une pompe ou un générateur d'électricité de secours.

Il existe différentes façons de commander un régulateur alimentation électrique conforme à l'invention. Le procédé illustré à la figure 4 et décrit en référence à cette figure n'est qu'un exemple. Dans un autre mode de réalisation, un ou plusieurs modules de mesure électrique peuvent fournir une indication de la puissance électrique fournie par le générateur d'énergie électrique. Un contrôleur peut commander le régulateur alimentation électrique à partir de cette indication. Par ailleurs, un contrôleur conforme à l'invention n'est pas nécessairement sous forme d'un processeur convenablement programmé. Le processeur peut être comprendre des circuits électroniques dédiés.

Bien que les dessins montrent différentes entités fonctionnelles sous la forme de différents blocs, cela n'exclut en aucune manière des réalisations où une seule entité physique effectue plusieurs fonctions ou, inversement, des réalisations où plusieurs entités physiques effectuent collectivement une seule fonction. A cet égard, les dessins sont très schématiques.

Par ailleurs, il existe de nombreuses entités fonctionnelles pouvant être réalisées au moyen de matériel (en anglais: hardware) ou de logiciel (en anglais: software) ou une combinaison de matériel et de logiciel. La description d'une réalisation principalement basée sur du logiciel n'exclut nullement des réalisations principalement, voire entièrement, basée sur du matériel, et vice versa. Des implémentations hybrides sont également possibles dans le sens où un système, ou une entité fonctionnelle comprise dans le système, comprend un ou plusieurs circuits dédiés ainsi qu'un ou plusieurs processeurs convenablement programmés.

Dans une variante, l'alternateur 106 peut être remplacé par une machine électrique telle qu'un alterno-démarreur.

Dans une autre variante, le stockeur d'énergie électrique peut également être du type condensateur ou supercondensateur, une batterie Lithium-ion.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Système d'alimentation électrique (100) comprenant :
- un générateur d'énergie électrique (101) apte à fournir une puissance électrique à un consommateur d'énergie électrique (105),
- un dispositif de stockage d'énergie électrique (102), et
- un régulateur d'alimentation électrique (103) disposé entre le générateur d'énergie électrique et le dispositif de stockage d'énergie électrique,
le système d'alimentation électrique comprenant un contrôleur (104) apte à commander le régulateur d'alimentation électrique de fonctionner dans au moins un des deux modes suivants :
a) un mode de délestage lorsqu'une indication de la puissance électrique fournie par le générateur d'énergie électrique est au-dessus d'un seuil de délestage, dans lequel mode le régulateur d'alimentation électrique tire une puissance électrique du dispositif de stockage d'énergie électrique pour fournir au moins une partie de cette puissance électrique au consommateur d'énergie électrique, le régulateur d'alimentation électrique fonctionnant en générateur de courant pur, et
b) un mode de lestage lorsqu'une indication de la puissance électrique fournie par le générateur d'énergie électrique est en dessous d'un seuil de lestage, dans lequel mode le régulateur d'alimentation électrique tire une puissance électrique du générateur d'énergie électrique pour fournir au moins une partie de cette puissance électrique au dispositif de stockage d'énergie électrique,
**caractérisé en ce que** le contrôleur (104) est apte à contrôler le régulateur d'alimentation électrique (103) pour qu'en au moins un des deux modes, le mode de délestage et le mode de lestage, la puissance électrique tirée du dispositif de stockage d'énergie électrique dans le cas du mode de lestage ou la puissance électrique du dispositif de stockage d'énergie électrique fournie au consommateur électrique dans le cas du mode de délestage, varie en fonction d'un écart entre, d'une part, l'indication de la puissance électrique fournie par le générateur d'énergie électrique et, d'autre part, le seuil de délestage en mode de délestage, et le seuil de lestage en mode de lestage.

2. Système d'alimentation électrique selon la revendication 1, dans lequel le contrôleur (104) est apte à déterminer une limite pour la puissance électrique tirée du dispositif de stockage d'énergie électrique (102) et de contrôler le régulateur d'alimentation électrique (103) pour que la puissance électrique tirée du dispositif de stockage ne dépasse pas cette limite.

3. Système d'alimentation électrique selon la revendication 2, dans lequel le contrôleur (104) est apte à déterminer la limite pour la puissance électrique tirée du dispositif de stockage d'énergie électrique (102) en tant que pourcentage de la puissance électrique fournie par le générateur d'énergie électrique (101) au consommateur d'énergie électrique (105).

4. Système d'alimentation électrique la revendication 2 ou 3, dans lequel le contrôleur (104) est apte à adapter la limite pour la puissance électrique tirée du dispositif de stockage (102) en fonction d'au moins un des paramètres suivants : (i) un niveau de charge du dispositif de stockage (CHst), (ii) une température relative au dispositif de stockage (Tst), (iii) une indication d'un état de vieillissement du dispositif de stockage.

5. Système d'alimentation électrique selon l'une quelconque des revendications 1 à 4, dans lequel le contrôleur (104) est apte à commander le régulateur d'alimentation électrique (103) de fonctionner dans le mode de délestage que lorsque le dispositif de stockage d'énergie électrique (102) a un niveau de charge supérieure à un seuil de charge minimale (CHst > CHmin).

6. Système d'alimentation électrique selon l'une quelconque des revendications 1 à 5, dans lequel le contrôleur (104) est apte à appliquer un ensemble de consignes (C) au régulateur d'alimentation électrique (103) en mode de délestage, l'ensemble de consignes comprenant : (i) une consigne de tension de sortie qui est supérieure à une tension de sortie (U1) fournie par le générateur d'énergie électrique (101), et (ii) une consigne de courant de sortie déterminée en fonction d'une valeur cible (Pex-el) pour la puissance électrique fournie par le régulateur d'alimentation électrique au consommateur d'énergie électrique (105) de sorte à obtenir un fonctionnement en générateur de courant pur.

7. Système d'alimentation électrique selon l'une quelconque des revendications 1 à 6, dans lequel le contrôleur (104) est apte à adapter le seuil de délestage en fonction d'au moins un paramètre de fonctionnement du générateur d'énergie électrique (101).

8. Système d'alimentation électrique selon l'une quelconque des revendications 1 à 7, dans lequel le générateur d'énergie électrique (101) comprend un moteur (107) et une machine électrique (106) apte à prélever un couple du moteur, l'indication de la puissance fournie par le générateur d'énergie électrique étant une indication du couple prélevé du moteur.

9. Véhicule automobile comprenant un système d'alimentation électrique (100) selon l'une quelconque des revendications 1 à 8.

## Patentansprüche

1. Ein Stromversorgungssystem (100) mit :
- einen Stromerzeuger (101), der geeignet ist, einen Stromverbraucher (105) mit elektrischer Energie zu versorgen,
- eine elektrische Energiespeichervorrichtung (102), und
- ein Stromversorgungsregler (103), der zwischen dem Stromgenerator und der elektrischen Energiespeichervorrichtung angeordnet ist,
wobei das Stromversorgungssystem einen Steuerung (104) umfasst, der dazu ausgelegt ist, den Stromversorgungsregler so zu steuern, dass er in mindestens einem der folgenden zwei Modi arbeitet:
a) einen Lastabwurfmodus, wenn eine Anzeige der vom elektrischen Leistungsgenerator gelieferten elektrischen Leistung über einem Lastabwurfschwellenwert liegt, wobei in diesem Modus die Stromversorgungssteuerung elektrische Leistung aus der elektrischen Energiespeichervorrichtung entnimmt, um zumindest einen Teil dieser elektrischen Leistung an den elektrischen Leistungsverbraucher zu liefern, wobei die Stromversorgungssteuerung als reiner Stromgenerator arbeitet; und
(b) einen Ballastmodus, wenn eine Anzeige der vom elektrischen Leistungsgenerator gelieferten elektrischen Leistung unter einem Ballast-Schwellenwert liegt, wobei in diesem Modus der Stromversorgungs-Controller elektrische Leistung vom elektrischen Leistungsgenerator bezieht, um zumindest einen Teil dieser elektrischen Leistung an das elektrische Energiespeichergerät zu liefern,
**dadurch gekennzeichnet, dass** der Steuerung (104) geeignet ist, den Stromversorgungsregler (103) so zu steuern, dass in mindestens einem der beiden Modi, dem Lastabwurfmodus und dem Ballastmodus, die elektrische Leistung, die im Fall des Lastabwurfmodus aus der elektrischen Energiespeichervorrichtung entnommen wird, oder die elektrische Leistung aus der elektrischen Energiespeichervorrichtung, die dem elektrischen Verbraucher zugeführt wird, im Fall des Lastabwurfmodus, variiert in Abhängigkeit von einer Differenz zwischen einerseits der Anzeige der vom Stromgenerator gelieferten elektrischen Leistung und andererseits der Lastabwurfschwelle im Lastabwurfmodus und der Ballastschwelle im Ballastmodus.

2. Stromversorgungssystem nach Anspruch 1, wobei die Steuerung (104) so ausgelegt ist, dass sie einen Grenzwert für die von der elektrischen Energiespeichervorrichtung (102) bezogene elektrische Leistung bestimmt und die Stromversorgungssteuerung (103) so steuert, dass die von der Speichervorrichtung bezogene elektrische Leistung diesen Grenzwert nicht überschreitet.

3. Stromversorgungssystem nach Anspruch 2, bei dem die Steuerung (104) so ausgelegt ist, dass sie den Grenzwert für die von der elektrischen Energiespeichervorrichtung (102) bezogene elektrische Leistung als Prozentsatz der von dem Generator (101) für elektrische Energie an den Verbraucher (105) für elektrische Energie gelieferten elektrischen Leistung bestimmt.

4. Stromversorgungssystem nach Anspruch 2 oder 3, bei dem die Steuerung (104) so ausgelegt ist, dass sie den Grenzwert für die von der Speichervorrichtung (102) bezogene elektrische Leistung als Funktion mindestens eines der folgenden Parameter anpasst: (i) einen Speichergerät-Ladestand (CHst), (ii) eine Speichergerät-Temperatur (Tst), (iii) eine Anzeige eines Alterungszustands des Speichergeräts.

5. Stromversorgungssystem nach einem der Ansprüche 1 bis 4, wobei die Steuerung (104) so ausgelegt ist, dass sie den Stromversorgungsregler (103) so steuert, dass er nur dann im Lastabwurfmodus arbeitet, wenn die elektrische Energiespeichervorrichtung (102) einen Lastpegel über einem minimalen Lastschwellenwert (CHst > CHmin) aufweist.

6. Stromversorgungssystem nach einem der Ansprüche 1 bis 5, wobei der Steuerung (104) so ausgelegt ist, dass er im Lastabwurfmodus einen Satz von Sollwerten (C) an den Stromversorgungsregler (103) anlegt, wobei der Satz von Sollwerten Folgendes umfasst: : (i) einen Ausgangsspannungs-Sollwert, der höher ist als eine Ausgangsspannung (U1), die von dem elektrischen Leistungsgenerator (101) geliefert wird, und (ii) einen Ausgangsstrom-Sollwert, der in Übereinstimmung mit einem Zielwert (Pex-el) für die elektrische Leistung bestimmt wird, die von dem Leistungsversorgungsregler an den elektrischen Leistungsverbraucher (105) geliefert wird, um einen reinen Leistungsgeneratorbetrieb zu erhalten.

7. Stromversorgungssystem nach einem der Ansprüche 1 bis 6, wobei die Steuerung (104) so ausgelegt ist, dass sie den Lastabwurfschwellenwert in Abhängigkeit von mindestens einem Betriebsparameter des Stromgenerators (101) anpasst.

8. Stromversorgungssystem nach einem der Ansprüche 1 bis 7, wobei der elektrische Leistungsgenerator (101) einen Motor (107) und eine elektrische Maschine (106) umfasst, die in der Lage ist, ein Drehmoment von dem Motor aufzunehmen, wobei die Angabe der von dem elektrischen Leistungsgenerator gelieferten Leistung eine Angabe des von dem Motor aufgenommenen Drehmoments ist.

9. Kraftfahrzeug mit einem Stromversorgungssystem (100) nach einem der Ansprüche 1 bis 8.

## Claims

1. A power supply system (100) comprising :
- an electric power generator (101) adapted to supply electric power to an electric power consumer (105),
- an electrical energy storage device (102), and
- a power supply regulator (103) disposed between the electric power generator and the electric energy storage device,
the power supply system comprising a controller (104) adapted to control the power supply regulator to operate in at least one of the following two modes
a) a load-shedding mode when an indication of the electrical power supplied by the electrical power generator is above a load-shedding threshold, in which mode the power supply controller draws electrical power from the electrical energy storage device to supply at least a portion of that electrical power to the electrical power consumer, the power supply controller operating as a pure current generator; and
(b) a ballast mode when an indication of the electrical power supplied by the electrical power generator is below a ballast threshold, in which mode the power supply controller draws electrical power from the electrical power generator to supply at least part of that electrical power to the electrical energy storage device,
**characterized in that** the controller (104) is adapted to control the power supply regulator (103) so that in at least one of the two modes, the load-shedding mode and the ballast mode, the electrical power drawn from the electrical energy storage device in the case of the load-shedding mode or the electrical power from the electrical energy storage device supplied to the electrical consumer in the case of the load-shedding mode, varies as a function of a difference between, on the one hand, the indication of the electrical power supplied by the power generator and, on the other hand, the load shedding threshold in load shedding mode, and the ballast threshold in ballast mode.

2. A power supply system according to claim 1, wherein the controller (104) is adapted to determine a limit for the electrical power drawn from the electrical energy storage device (102) and to control the power supply controller (103) so that the electrical power drawn from the storage device does not exceed this limit.

3. A power supply system according to claim 2, wherein the controller (104) is adapted to determine the limit for the electrical power drawn from the electrical energy storage device (102) as a percentage of the electrical power supplied by the electrical energy generator (101) to the electrical energy consumer (105).

4. A power supply system as claimed in claim 2 or 3, wherein the controller (104) is adapted to adapt the limit for the electrical power drawn from the storage device (102) as a function of at least one of the following parameters : (i) a storage device charge level (CHst), (ii) a storage device temperature (Tst), (iii) an indication of an aging state of the storage device.

5. A power supply system according to any one of claims 1 to 4, wherein the controller (104) is adapted to control the power supply regulator (103) to operate in the load-shedding mode only when the electrical energy storage device (102) has a load level above a minimum load threshold (CHst > CHmin).

6. A power supply system according to any one of claims 1 to 5, wherein the controller (104) is adapted to apply a set of setpoints (C) to the power supply regulator (103) in load-shedding mode, the set of setpoints comprising:. i) an output voltage setpoint which is higher than an output voltage (U1) provided by the electric power generator (101), and (ii) an output current setpoint determined as a function of a target value (Pex-el) for the electric power supplied by the power supply regulator to the electric power consumer (105) so as to achieve pure current generator operation.

7. A power supply system according to any one of claims 1 to 6, wherein the controller (104) is adapted to adapt the load-shedding threshold as a function of at least one operating parameter of the electric power generator (101).

8. A power supply system according to any one of claims 1 to 7, wherein the electric power generator (101) comprises an engine (107) and an electric machine (106) capable of taking a torque from the engine, the indication of the power supplied from the electric power generator being an indication of the torque taken from the engine.

9. A motor vehicle comprising a power supply system (100) according to any one of claims 1 to 8.
